# NEUE EUROPÄISCHE PATENTSCHRIFT

(11) **EP 0 472 994 B2**
(45) Veröffentlichungstag und Bekanntmachung des Hinweises auf die Entscheidung über den Einspruch: **08.07.1998**
(45) Hinweis auf die Patenterteilung: 15.03.1995
(21) Anmeldenummer: 91113539.0
(22) Anmeldetag: 13.08.1991
(51) Int. Cl.: F16H 61/02, F16H 61/06

(54) **Hydraulische Regeleinrichtung für Schaltglieder eines Lastschaltgetriebes**
Hydraulic control mechanism for switching elements of a power change transmission
Dispositif de commande hydraulique pour les éléments de contrôle d'une transmission automatique de puissance

(30) Priorität: 23.08.1990 DE 4026619
(43) Veröffentlichungstag der Anmeldung: 04.03.1992
(73) Patentinhaber: Volkswagen Aktiengesellschaft, 38436 Wolfsburg (DE)
(72) Erfinder: Prüss, Ludwig, W-3300 Braunschweig (DE)

(56) Entgegenhaltungen:
- EP-A- 309 591
- DE-A- 2 901 051
- DE-A- 3 836 754
- US-A- 3 797 330
- US-A- 3 943 799

## Beschreibung

Die Erfindung betrifft eine hydraulische Regeleinrichtung für Schaltglieder eines Lastschaltgetriebes gemäß dem Oberbegriff des Patentanspruches 1.

In der EP-0 309 591-A1 wird zur Steuerung von Schaltgliedern eines Lastschaltgetriebes ein Schaltungsaufbau gezeigt, bei dem zur Beeinflussung von Schieberventilen als Proportionalventile ausgebildete Elektromagnetventile verwendet werden. Diese sind mit einer Rechnereinheit in der Weise verbunden, daß an den jeweiligen Schaltgliedern individuelle Hauptdruckniveaus gesondert einstellbar sind. Eine derartige Lösung ist insbesondere deshalb als besonders vorteilhaft anzusehen, weil damit nicht nur eine kompakte Bauweise erzielt wird, sondern auch ein Rückgriff auf bereits bewährte Schieberventilkonstruktionen in konventionellen hydraulischen Einrichtungen möglich ist.

Eine weitere Regeleinrichtung ist bekannt aus der US-A 39 43 799. Dort wird für die Steuerung von Schaltgliedern eines Lastschaltgetriebes eine Schieberventilanordnung gezeigt, die einem Handschaltventil nachgeordnet ist. Die Beaufschlagung der Schaltglieder mit einem von einer Pumpe erzeugten Hauptdruck erfolgt in Abhängigkeit von der Betätigung rechnergesteuerter Elektromagnetventile, durch die die jeweiligen Steuerflächen der Schieberventile mit Druck beaufschlagbar sind. Die Elektromagnetventile sind als sogenannte Schwarz-Weiß-Ventile ausgeführt, die im stromlosen Zustand eine erste Position und bei Bestromung eine zweite Position des im Schieberventil bewegbaren Steuerschiebers einstellen. Auf diese Weise erfolgt eine Umschaltung der Schaltglieder von vollem Hauptdruck auf vollständige Belüftung. Hinweise auf die Einstellung von Zwischendrücken sind dieser Schrift nicht entnehmbar. In an sich bekannter Weise wäre ein wünschenswerter Komfortbetrieb dann möglich, wenn die Steuerung um sogenannte Anlegeschieber und Überdeckungsschieber erweitert würde. Dieser zusätzliche Konstruktionsaufwand würde aber zur einer Bauraumvergrößerung des die Ventile aufnehmenden Schieberkastens führen.

Aus der DE-A 29 01 051 sind elektromagnetisch betätigbare Druckregelventile bekannt, bei denen für die Ansteuerung der Schaltglieder das Druckniveau stromproportional einstellbar ist. Auf diese Weisen ist es mit apparativ geringem Aufwand möglich, über ein elektronisches Steuergerät je nach Ansteuerung der Druckregelventile die Vorwärtsgänge, den Rückwärtsgang oder die Neutralstellung einzulegen. Die von einer zentralen Rechnereinheit beeinflußte Betätigung der Schaltglieder über elektromagnetisch betätigbare Ventile ist von der Grundkonzeption her an sich vorteilhaft, würde jedoch zu einem erhöhten Bauaufwand führen. Im Unterschied zu der gattungsgemäßen Regeleinrichtung wird bei der Einrichtung gemäß der DE-A 29 01 051 der Hauptdruck durch die Elektromagnetventile selbst gesteuert. Die bei einem Viergang-Automatikgetriebe in der Getriebesteuerung umgewälzten Volumenströme führen bei einer direkten Steuerung des Hauptdruckes durch die Elektromagnetventile für diese zu vergrößertem Bauraum.

Hydraulische Regeleinrichtungen der eingangs beschriebenen Art (siehe EP 0 309 591-A1) sind prinzipiell sehr wenig störanfällig, weil sowohl bei den Schieberventilen als auch bei den Elektromagnetventilen auf robuste und bewährte Technik zurückgegriffen werden kann.

Vor diesem Hintergrund liegt der Erfindung die Aufgabe zugrunde die Zuverlässigkeit von Getriebesteuerungen der eingangs genannten Art noch weiter zu erhöhen.

Diese Aufgabe wird gelöst durch eine hydraulische Regeleinrichtung gemäß den Merkmalen des Patentanspruchs 1. Die Unteransprüche enthalten besonders zweckmäßige Weiterbildungen der Erfindung.

Erfindungsgemäß ist also bei Überschreitung eines vorgegebenen Hauptdruckes eine Steuerfläche des Hauptdruckventils mit dem erhöhten Hauptdruck beaufschlagbar. Es wird demnach eine Sicherheitsfunktion für den Fall vorgesehen, daß der Hauptdrucksteuerschieber klemmt. Über ein Notventil wird eine das Hauptdruckventil und den Handschieber verbindende Leitung so mit Druck beaufschlagt, daß der Schieberkolben im Hauptdruckventil über einen Druckimpuls aus einer störungsbedingten Verklemmung gelöst werden kann.

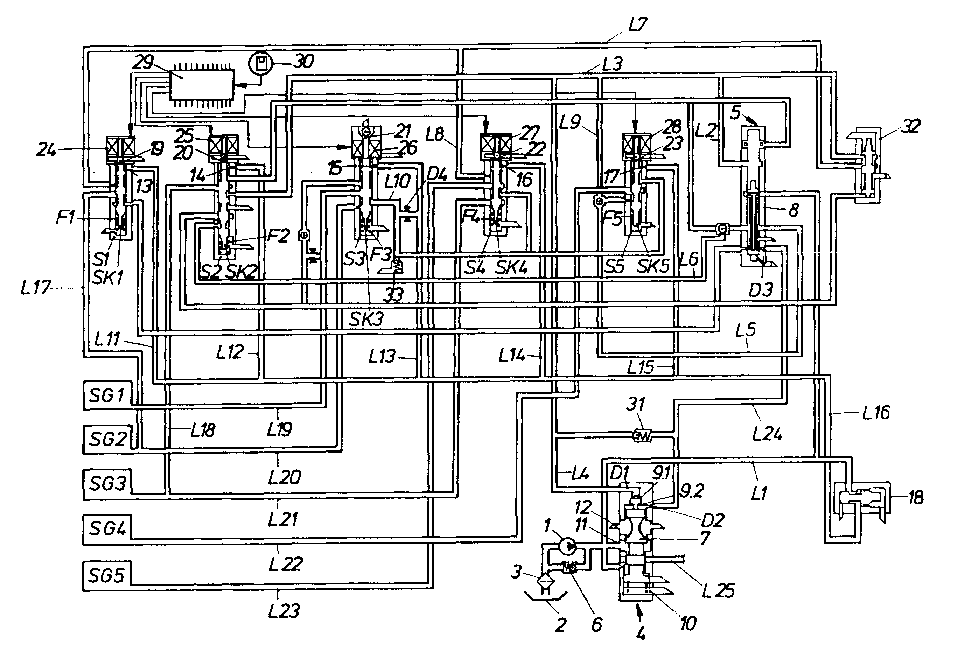

Ein besonders vorteilhaftes Ausführungsbeispiel der Erfindung ist für ein nicht weiter dargestelltes Viergang-Automatikgetriebe anhand eines Hydraulikschaltplanes schematisch dargestellt. Man erkennt dort eine Pumpe 1, die aus einem Ölsumpf 2 über ein Filter 3 in Abhängigkeit von einem Hauptdruckventil 4 Hauptdruck in eine zu einem Handschieberventil 5 führende Leitung L1 fördert. Ein erstes Druckbegrenzungsventil 6 stellt sicher, daß von der Pumpe 1 in die Leitung L1 keine unzulässig hohen Drücke gefördert werden. Die Höhe des Hauptdruckes wird im Hauptdruckventil 4 über einen Schieberkolben 7 reguliert. Dieser ist mit einem in der Zeichnung nicht dargestellten Handwählhebel verbunden, der in Positionen P (Parkstellung), R (Rückwärtsgang), N (Neutralstellung), sowie D, 1, 2, 3, 4 (Vorwärtsfahrstufen) arretierbar ist. Befindet sich der Hohlschieberkolben 8 des Handschieberventils 5 in einer den Vorwärtsfahrstufen zugeordneten Stellung, so gelangt Hauptdruck über Leitungen L2, L3, L4 und eine Drossel D1 auf eine erste Wiegefläche 9.1 des Schieberkolbens 7. (Die Funktion der zweiten Wiegefläche 9.2 wird später noch beschrieben.) Überschreitet der Hauptdruck in den Leitungen L1 - L4 einen vorgegebenen Wert, wird der Schieberkolben 7 entgegen der Wirkung einer Rückstellkraft 10 aufgrund des an der ersten Wiegefläche 9.1 anliegenden Druckes nach unten bewegt, so daß der von der Pumpe 1 mit Hauptdruck beaufschlagte Flüssigkeitsstrom am Hauptdruckventil 4 über den Zulauf 11 einem drucklosen Auslauf 12 zugeführt wird. Die als Dämpfungsglied wirkende Drossel D1 sorgt dafür, daß nicht sofort bei jeder Druckspitze eine Absteuerung des Hauptdruckes erfolgt. Der je nach Stellung des Hohlkolbenschiebers 8 auf unterschiedliche Leitungen verteilbare Hauptdruck ist über Leitungen L3 und L5 bis L10 Schieberventilen S1 - S5 zuführbar, deren jeweilige Schieberkolben SK1 - SK5 unter der Vorspannung von Druckfedern F1 - F5 im hier nicht näher bezifferten Ventilgehäuse jeweils gehalten sind. Die Position der Schieberkolben SK1 - SK5 ist darüber hinaus über gedrosselte Zulauföffnungen 13 - 17 mit Vorsteuerdruck beaufschlagbar. Der über Leitungen L11 - L15 den Schieberventilen S1 - S5 zugeführte Vorsteuerdruck wird begrenzt durch ein zweites Druckbegrenzungsventil 18, das ebenfalls wie auch das Handschieberventil 5 über die Leitung L1 mit dem von der Pumpe 1 gelieferten Hauptdruck versorgt wird. Der vom zweiten Druckbegrenzungsventil 18 eingestellte Vorsteuerdruck wird dann über eine Leitung L16 auf die Leitungen L11 - L15 verteilt. Über Ablauföffnungen 19 - 23 können die Schieberkolben SK1 - SK5 jeweils durch die Betätigung von Elektromagnetventilen 24 - 28 je nach deren Öffnungsgrad vom Vorsteuerdruck entlastet werden, so daß unter der Wirkung der Federn F1 - F5 eine dem jeweiligen Öffnungsgrad entsprechende Verschiebung der Schiebekolben SK1 - SK5 mit Bezug auf die Zeichnung nach oben erfolgt. Bei den Elektromagnetventilen 24 - 28 handelt es sich um Proportionalventile, die je nach Bestromung einen entsprechenden Öffnungsquerschnitt an den Ablauföffnungen 19 - 23 einstellen. Die Bestromung erfolgt in Abhängigkeit von Signalen einer Rechnereinheit (Steuereinrichtung) 29 über hier nicht weiter bezifferte und in der Zeichnung mit dünnen Strichen dargestellte Leitungen. In symbolischer Darstellung ist mit 30 eine Sensoreinrichtung bezeichnet, die unterschiedliche Betriebszustände des hier nicht weiter dargestellten Lastschaltgetriebes erfaßt. Eine den Betriebszustand des Lastschaltgetriebes charakterisierende Kenngröße kann beispielsweise neben vielen anderen die Getriebeeingangswellendrehzahl sein. Über Leitungen L17 - L23 sind Schaltglieder SG1 - SG5 jeweils gesondert mit Hauptdruck beaufschlagbar, wobei dessen Druckniveau für die einzelnen Schaltglieder SG1 - SG5 individuell an den Schieberventilen S1 - S5 einstellbar ist. Die Schaltglieder SG1 - SG5 gehören hier zu einem Viergang-Automatikgetriebe, bei dem in an sich bekannter Weise die Schaltglieder SG1 - SG2 nach der Art einer Bandbremse und die Schaltglieder SG3 - SG5 nach der Art einer Lamellenkupplung ausgebildet sind.

Von besonderer Bedeutung ist eine Verbindungsleitung L24, die über eine Drossel D2 an das Hauptdruckventil 4 und über eine Drossel D3 an das Handschieberventil 5 angeschlossen ist. Aus später noch zu nennenden Gründen ist der Öffnungsquerschnitt der Drossel D3 kleiner bemessen als derjenige der Drossel D2. Die Leitungen L4 und L24 sind über ein Notventil 31 miteinander verbindbar. Dessen Funktion wird im Zusammenhang mit den Funktionen der Drosseln D2 und D3 später noch zu erläutern sein. Das Hauptdruckventil 4 ist über eine nur angedeutete Leitung L25 mit einem nicht dargestellten Wandlerdruckschieber verbunden, von dem aus ein dem Viergang-Automatikgetriebe zugeordneter, hydrodynamischer Wandler ansteuerbar ist. Ein mit 32 bezeichneter Sicherheitsschieber ist so ausgeführt, daß er durch elektronisches Fehlverhalten verursachte Fehlbeaufschlagungen an entsprechenden Schaltgliedern bei einer Stellung des Handwählhebels in der Fahrstufe "1" nicht zuläßt.

Von großer Wichtigkeit sind schließlich noch ein der Leitung L10 zugeordnetes Restdruckventil 33 sowie eine Drossel D4. Über diese Drossel D4 sind die Leitungen L10 und L13 miteinander verbunden, so daß der über die L16 gelieferte Vorsteuerdruck die Schieberkolben SK3, SK4 und SK5 gedrosselt beaufschlagt. Das Zusammenwirken von Restdruckventil 33 und Drossel D4 wird ebenfalls später erläutert.

Wenn beispielsweise das Viergang-Automatikgetriebe im zweiten Gang betrieben werden soll, sind die Schaltglieder SG2 und SG3 so zu betätigen, daß über sie ein Antriebsmoment von der Getriebeeingangswelle auf die Getriebeausgangswelle übertragen werden kann. Das nicht weiter dargestellte Lastschaltgetriebe ist so aufgebaut, daß zum hydraulischen Schalten aus dem zweiten Gang in den dritten Gang eine Entlüftung des Schaltgliedes SG2 und eine Beaufschlagung des Schaltgliedes SG4 bei nach wie vor betätigtem Schaltglied SG3 erfolgt. Beim hydraulisch eingelegten zweiten Gang befindet sich der nicht dargestellte Handwählhebel in der Position "D". Dies hat zur Folge, daß der Hohlkolbenschieber 8 in eine Stellung verschoben wird, in der eine Verbindung zwischen den Leitungen L1 und L2 hergestellt wird. Die Beaufschlagung des Schaltgliedes SG3 mit Hauptdruck erfolgt über die Leitungen L2, L3, das Schieberventil S2 und die Leitung L18. Dabei wird von der Steuereinrichtung 29 das Elektromagnetventil 25 so betätigt, daß die Ablauföffnung 20 gezielt geöffnet wird, um einen vorgegebenen Druckaufbau am Schaltglied SG3 zu gewährleisten. Durch die Wirkung der Feder F2 befindet sich der Schieberkolben SK2 in der in der Zeichnung dargestellten Stellung, so daß der Hauptdruck das Schieberventil S2 passieren kann. Die zur Aktivierung des zweiten Ganges ebenfalls notwendige Beaufschlagung des Schaltgliedes SG2 mit Hauptdruck erfolgt über die Leitungen L2, L3, das Sicherheitsschieberventil 32, Leitung L7, Schieberventil S1 und die Leitung L17. Das Elektromagnetventil 24 wird so betätigt, daß die Ablauföffnung 19 verschlossen wird. Dadurch ist der in der Leitung L11 anstehende Begrenzungsdruck in der Lage, den Schieberkolben SK1 gegen die Wirkung der Feder F1 nach unten zu verschieben, so daß die Leitungen L7 und L17 miteinander verbunden werden. Auch die Verbindung zwischen den Leitungen L7 und L17 kann durch gezielte Bestromung des Elektromagnetventils 24 so hergestellt werden, daß sich am Schaltglied SG2 ein vorgegebener Druckaufbau einstellt. Darüber hinaus ist zu bemerken, daß durch das Elektromagnetventil 28 die Ablaufleitung 23 geschlossen wird. Der Schieberkolben SK5 wird demnach durch den in der Leitung L15 anstehenden Vorsteuerdruck gegen die Wirkung der Feder F5 nach unten bewegt, so daß die zum Schaltglied SG4 führende Leitung L22 von dem in der Leitung L9 anstehenden Hauptdruck abgeschnitten wird. Gleichzeitig sind die Elektromagnetventile 26 und 27 so geschaltet, daß die Ablauföffnungen 21 und 22 geöffnet sind.

Beim Hochschalten vom zweiten in den dritten Gang ist - wie zuvor bereits erwähnt - das Schaltglied SG2 zu lüften und das Schaltglied SG4 mit Hauptdruck zu beaufschlagen. Zu diesem Zweck schaltet die Steuereinrichtung 29 das Elektromagnetventil 28 so, daß die Ablauföffnung 23 geöffnet wird. Der Schieberkolben SK5 wird somit durch die Feder F5 nach oben bewegt. Dies hat zur Folge, daß nun die Leitung L9 über das Schieberventil S5 mit der zum Schaltglied 4 führenden Leitung L22 verbunden wird. Die Lüftung des Schaltgliedes FG2 erfolgt durch eine Betätigung des Elektromagnetventils 24 in der Weise, daß die Ablauföffnung 19 geöffnet wird. Damit bewegt sich der Schieberkolben SK1 nach oben und sperrt somit den in der Leitung L7 vorhandenen Hauptdruck gegen die Leitung L17 ab. Gegenüber dem zweiten Getriebegang wird an dem Zustand der Elektromagnetventile 25, 26 und 27 nichts geändert.

Die zeitliche Abfolge der für die Schaltvorgänge notwendigen Betätigungen der Elektromagnetventile wird durch die Steuereinrichtung 29 festgelegt. So wird beispielsweise in Abhängigkeit von einem Leistungsstellglied einer das Lastschaltgetriebe antreibenden Brennkraftmaschine und in Abhängigkeit von der Getriebeausgangswellendrehzahl festgelegt, mit welcher Geschwindigkeit eine Lüftung bzw. eine Beaufschlagung der jeweils zu betätigenden Schaltglieder erfolgen soll. Auch die schnelle Überwindung des Leerweges in den Schaltgliedern kann durch entsprechende Betätigungen der Elektromagnetventile sichergestellt werden, so daß auf die bisher im Einsatz befindlichen gesonderten Anlegeschieber verzichtet werden kann. Entfallen können auch die bislang üblichen Überdeckungsschieber, welche im allgemeinen dafür sorgen, daß an einem zu lüftenden Schaltglied ein bestimmter Restdruck gehalten wird, um bei einer neuerlichen Beaufschlagung möglichst spontan den Hauptdruck im Schaltglied nutzbar zu machen. Der Verzicht auf die vorgenannten Schieberarten ermöglicht eine direkte Anbindung der Schaltglieder SG1 - SG5 an die ihnen jeweils zugeordneten Schieberventile S1 - S5. Die sich somit ergebende Verkürzung hydraulischer Wege führt insgesamt zu einer erheblichen Verringerung der in der Getriebesteuerung anfallenden Totzeiten und erhöht so die Spontaneität der gesamten Steuerung. Gleichzeitig wird auch deren Zuverlässigkeit erhöht, weil die Anzahl potentiell störanfälliger Bauelemente erheblich verringert worden ist.

Die Feinfühligkeit der Steuerung ergibt sich daraus, daß die nach der Art eines Proportionalventiles gebildeten Elektromagnetventile lediglich ein den Hauptdruck steuerndes Bauteil ansteuern und nicht etwa gemäß der eingangs bereits erwähnten DE-A 29 01 051 den Hauptdruck selbst steuern. Die bei einem Viergang-Automatikgetriebe in der Getriebesteuerung umgewälzten Volumenströme würden bei einer direkten Steuerung des Hauptdruckes durch die Elektromagnetventile für diese zu einer nicht akzeptablen Baugröße führen.

Von besonderer Bedeutung ist bei dem in der Zeichnung dargestellten Ausführungsbeispiel die Verbindungsleitung L24 im Zusammenwirken mit den Drosseln D2 und D3 sowie dem Notventil 31. Sollte sich beispielsweise aufgrund von Verschmutzungen der Kolben 7 im Hauptdruckventil 4 verklemmen, könnten in der gesamten Getriebesteuerung unzulässig hohe Drücke auftreten, weil der über die Leitung L4 auf den Kolben 7 über die Drossel D1 zurückgeführte Hauptdruck nicht mehr in der Lage ist, den Kolben 7 zur Absteuerung des Hauptdruckes gegen die Wirkung der Feder 10 nach unten zu bewegen. Bei Überschreitung eines vorgegebenen Druckes in der Leitung L4 von beispielsweise 15 bar öffnet das Notventil 31 und setzt die Verbindungsleitung L24 unter Druck. Der Öffnungsquerschnitt der Drossel D3 ist geringer als derjenige der Drossel D2, so daß der über das Notventil 31 in die Verbindungsleitung L24 geführte hohe Druck zunächst im Hauptdruckventil 4 wirksam wird. Dort beaufschlagt er mit einer aus einem Druckimpuls resultierenden Stoßkraft den Kolben 7 über die Wiegefläche 9.2. Der Betrag dieser Stoßkraft ist so groß, daß der Kolben 7 auf jeden Fall aus seiner Verklemmung freigeschlagen wird und somit eine Absteuerung des Hauptdruckes zum drucklosen Auslauf 12 hin wieder möglich wird. Durch diese konstruktive Maßnahme wird die Zuverlässigkeit der Getriebesteuerung weiter erhöht.

Eine besonders große Spontaneität bei der Betätigung der Schaltglieder ergibt sich bei dem erfindungsgemäßen Ausführungsbeispiel durch das Zusammenwirken von Restdruckventil 33 und Drossel D4. Das Restdruckventil 33 sorgt generell dafür, daß die Schaltglieder SG1 - SG5 mit Druckmedium gefüllt bleiben. Aufgrund von Unregelmäßigkeiten beim Betrieb der Regeleinrichtung ist es aber durchaus möglich, daß in mehr oder weniger großem Umfang Entleerungen zumindest einzelner Schaltglieder über das Restdruckventil 33 auftreten können. Die Verbindung zwischen den Leitungen L10 und L13 über die Drossel D4 stellt sicher, daß ständig Druckmedium über wenigstens eines der Schieberventile S3 bis S5 nachgefüllt werden kann, so daß eine Entleerung der Schaltglieder in jedem Falle ausgeschlossen ist. Diese Dauerbefüllung der Schaltglieder erfolgt in einem solchen Umfang, daß durch diese kein Moment übertragbar ist. Somit ist ständig ein reproduzierbarer Druckaufbau in den Schaltgliedern gesichert.

Das hier vorgeschlagene Steuerungskonzept bietet auch mehrere Ansatzpunkte für eine kostengünstige konstruktive Umsetzung. So ist es beispielsweise möglich, eine Reihe von Schieberventilen baugleich oder aber zumindest ähnlich auszuführen. Dies gilt bei dem in der Zeichnung dargestellten Ausführungsbeispiel besonders für die Schieberventile S1, S4 und S5. Es kann ferner auf Bauteile zurückgegriffen werden, die sich schon im Serieneinsatz befinden. Auch bei der Auswahl der Proportionalventile kann auf bewährte Technik zurückgegriffen werden. Dabei ist herauszustellen, daß für die erfindungsgemäße Steuerung einfache Proportionalventile ohne besondere Kennungen verwendet werden können.

Es ist auch denkbar, Proportionalventile zu verwenden, bei denen der Druck in einem breiten Bandbereich dem vorgegebenen Strom folgt. Derartige Proportionalventile können mit relativ groben Toleranzen gefertigt werden und liefern somit ebenfalls wirksame Ansatzpunkte für eine kostengünstige Fertigung.

## Patentansprüche

1. Hydraulische Regeleinrichtung für Schaltglieder (SG1 - SG5) eines Lastschaltgetriebes mit einem Hauptdruckventil (4) zur Steuerung eines von einer Pumpe (1) erzeugten Hauptdruckes sowie mit von einer Rechnereinheit (29) beeinflußbaren Elektromagnetventilen (24 - 28),
- denen einem Handschaltventil (5) nachgeschaltete Schieberventile (S1 - S5) in der Weise zugeordnet sind, daß zumindest eine Steuerfläche des jeweiligen Schieberventils (S1 - S5) mit Druck beaufschlagbar ist,
- die als Proportionalventile ausgebildet sind, durch die in Abhängigkeit von Signalen der Rechnereinheit (29) die Schieberventile (S1 - S5) zur gesonderten Einstellung individueller Druckniveaus an den Schaltgliedern (SG1 - SG5) beeinflußbar sind,
dadurch gekennzeichnet, daß bei Überschreitung eines vorgegebenen Hauptdruckes eine weitere Steuerfläche (9.2) des Hauptdruckventils (4) mit dem erhöhten Hauptdruck beaufschlagbar ist.

2. Hydraulische Regeleinrichtung nach Anspruch 1, dadurch gekennzeichnet, daß zwischen dem Handschieberventil (5) und dem Hauptdruckventil (4) eine Verbindungsleitung (L24) vorgesehen ist, die über ein Notventil (31) mit Druck beaufschlagbar ist, wenn der Hauptdruck einen vorgegebenen Höchstwert überschreitet, und die an ihren Enden Öffnungen (D2 und D3) unterschiedlicher Querschnittsgrößen aufweist.

3. Hydraulische Regeleinrichtung nach Anspruch 2, dadurch gekennzeichnet, daß in dem Hauptdruckventil (4) eine der Verbindungsleitung (L24) zugeordnete erste Sicherheitsdrossel (D2) und in dem Handschieberventil (5) eine ebenfalls der Verbindungsleitung (L24) zugeordnete zweite Sicherheitsdrossel (D3) angeordnet ist.

4. Hydraulische Regeleinrichtung nach Anspruch 3, dadurch gekennzeichnet, daß die erste Sicherheitsdrossel (D2) eine größere Querschnittsöffnung aufweist als die zweite Sicherheitsdrossel (D3).

5. Hydraulische Regeleinrichtung nach wenigstens einem der Ansprüche 1 bis 4, dadurch gekennzeichnet, daß bei wenigstens einem Schieberventil (S3) eine diesem den Hauptdruck zuführende Leitung (L10) über eine Drossel (D4) mit einer den Vorsteuerdruck führenden Leitung (L13) verbunden ist.

6. Hydraulische Regeleinrichtung nach Anspruch 5, dadurch gekennzeichnet, daß zur Vermeidung einer Schaltgliederentleerung der den Hauptdruck zuführenden Leitung (L10) ein Restdruckventil (33) zugeordnet ist.

7. Hydraulische Regeleinrichtung nach Anspruch 4 oder 5, dadurch gekennzeichnet, daß die den Hauptdruck zuführende Leitung (L10) mehreren Schieberventilen (S3, S4, S5) zugeordnet ist.

8. Hydraulische Regeleinrichtung nach Anspruch 1, dadurch gekennzeichnet, daß
- wenigstens eines der Schaltglieder (SG1 - SG5) mit dem ihm zugeordneten Schieberventil (S1 - S5) direkt hydraulisch verbunden ist,
- die Elektromagnetventile (24 - 28) durch die Rechnereinheit (29) auch zur Einstellung einer Geschwindigkeit bei der Lüftung der Schaltglieder (SG1 - SG5) oder bei der Überwindung von Leerwegen in den Schaltgliedern (SG1 - SG5) betätigt sind.

9. Hydraulische Regeleinrichtung nach Anspruch 1, dadurch gekennzeichnet, daß bei mehreren Schieberventilen (S1 - S5) zumindest zwei baugleich sind.

10. Hydraulische Regeleinrichtung nach Anspruch 1 oder 9, dadurch gekennzeichnet, daß die Schieberventile (S1 - S5) durch einen Vorsteuerdruck beaufschlagbar sind.

## Claims

1. A hydraulic control device for switching members (SG1-SG5) of a change-under-load transmission having a principal pressure valve (4) to control a principal pressure produced by a pump (1), and having solenoid valves (24-28) which can be influenced by a computer unit (29),
- to which solenoid valves are allocated sliding valves (S1-S5), connected down-stream of a manually operated valve (5), in such a way that at least one control surface of the respective sliding valve (S1-S5) can be subjected to pressure,
- which solenoid valves are formed as proportional valves, by means of which, in dependence upon signals from the computer unit (29), the sliding valves (S1-S5) can be influenced for the separate adjustment of individual pressure levels in the switching members (SG1-SG5)
characterised in that when a predetermined principal pressure is exceeded a further control surface (9.2) of the principal pressure valve (4) can be subjected to the increased principal pressure.

2. A hydraulic control device according to claim 1, characterised in that between the manual sliding valve (5) and the principal pressure valve (4) a connecting line (L24) is provided which can be subjected to pressure by way of an emergency valve (31) when the principal pressure exceeds a predetermined maximum value, and which, at its ends, comprises openings (D2 and D3) having cross-sections of different sizes.

3. A hydraulic control device according to claim 2, characterised in that in the principal pressure valve (4), a first safety restrictor (D2) allocated to the connecting line (L24) is disposed, and in the manual sliding valve (5), a second safety restrictor (D3) likewise allocated to the connecting line (L24) is disposed.

4. A hydraulic control device according to claim 3, characterised in that the first safety restrictor (D2) has a larger cross-sectional opening than the second safety restrictor (D3).

5. A hydraulic control device according to at least one of claims 1 to 4, characterised in that in the case of at least one sliding valve (S3), a line (L10) conveying the principal pressure to this valve is connected by way of a restrictor (D4) to a line (L13) conveying the pilot pressure.

6. A hydraulic control device according to claim 5, characterised in that in order to avoid an emptying of the switching members, a residual pressure valve (33) is allocated to the line (L10) conveying the principal pressure.

7. A hydraulic control device according to claim 4 or 5, characterised in that the line (L10) conveying the principal pressure is allocated to a plurality of sliding valves (S3, S4, S5).

8. A hydraulic control device according to claim 1, characterised in that
- at least one of the switching members (SG1 -SG5) is directly connected hydraulically to the sliding valve (S1-S5) allocated thereto,
- the solenoid valves (24-28) are actuated by the computer unit (29) also for the purpose of adjusting a speed during venting of the switching members (SG1-SG5) or when overcoming free play in the switching members (SG1 -SG5).

9. A hydraulic control device according to claim 1, characterised in the case of a plurality of sliding valves (S1-S5) at least two are of the same construction.

10. A hydraulic control device according to claim 1 or 9, characterised in that the sliding valves (S1-S5) can be subjected to a pilot pressure.

## Revendications

1. Système hydraulique de réglage pour des organes de commutation (SG1 - SG5) d'une boîte de vitesse avec un contrôleur principal de pression (4), qui sert à contrôler une pression principale produite par une pompe (1) et avec des électrovannes (24 - 28), qui peuvent être influencées par un ordinateur (29),
- auxquelles sont associées des vannes à tiroir (S1-S5), montées en aval d'une vanne de commutation manuelle (5), d'une manière telle qu'au moins une surface de commande de la vanne à tiroir correspondante (S1-S5) soit mise en pression,
- et qui sont constituées comme des vannes proportionnelles, au moyen desquelles on peut influencer en fonction de signaux de l'ordinateur (29) les vannes à tiroir (S1 - S5) servant au réglage particulier de niveaux de pression individuels sur les organes de commutation (SG1 - SG5),
caractérisé en ce que, quand une pression principale prédéfinie est dépassée, on peut solliciter une autre surface de commande (9.2) du contrôleur principal de pression (4) avec la pression principale accrue.

2. Système hydraulique de réglage selon la revendication 1, caractérisé en ce qu'entre la vanne à tiroir manuelle (5) et le contrôleur principal de pression (4) il est prévu une conduite de liaison (L24), qui peut être mise en pression au moyen d'une vanne de secours (31), quand la pression principale dépasse une valeur maximale prédéfinie, et qui présente à ses extrémités des orifices (D2 et D3) ayant des sections transversales de grandeurs différentes.

3. Système hydraulique de réglage selon la revendication 2, caractérisé en ce que dans le contrôleur principal de pression (4) on dispose un premier organe d'étranglement de sécurité (D2), associé à la conduite de liaison (L24), et dans la vanne à tiroir manuelle (5) on dispose un deuxième organe d'étranglement de sécurité (D3), également associé à la conduite de liaison (L24).

4. Système hydraulique de réglage selon la revendication 3, caractérisé en ce que le premier organe d'étranglement de sécurité (D2) présente un orifice dont la section transversale est plus grande que celle du second organe d'étranglement de sécurité (D3).

5. Système hydraulique de réglage selon au moins l'une des revendications 1 à 4, caractérisé en ce que dans le cas d'au moins l'une des vannes à tiroir (S3) une conduite (L10), qui amène la pression principale à celle-ci, est reliée au moyen d'un organe d'étranglement (D4) à une conduite (L13) qui fait passer la pression pilote.

6. Système hydraulique de réglage selon la revendication 5, caractérisé en ce que, pour éviter une vidange des organes de commutation on associe une vanne de pression résiduelle (33) à la conduite (L10) qui amène la pression principale.

7. Système hydraulique de réglage selon la revendication 4 ou 5, caractérisé en ce que la conduite (L10), qui amène la pression principale, est associée à plusieurs vannes à tiroir (S3, S4, S5).

8. Système hydraulique de réglage selon la revendication 1, caractérisé en ce que
- au moins l'un des organes de commutation (SG1 - SG5) est relié hydrauliquement de façon directe à la vanne à tiroir (S1 - S5), qui lui correspond,
- les électrovannes (24 - 28) sont actionnées par l'ordinateur (29) aussi pour régler une vitesse lors de la ventilation des organes de commutation (SG1 - SG5) ou lors du franchissement des courses à vide dans les organes de commutation (SG1 - SG5).

9. Système hydraulique de réglage selon la revendication 1, caractérisé en ce que deux vannes à tiroir au moins sont construites de la même façon, quand il y a plusieurs vannes à tiroir (S1 - S5).

10. Système hydraulique de réglage selon la revendication 1 ou 9, caractérisé en ce que l'on peut alimenter les vannes à tiroir (S1 à S5) par une pression pilote.
